# EUROPÄISCHE PATENTSCHRIFT

(11) **EP 0 584 292 B1**
(45) Veröffentlichungstag und Bekanntmachung des Hinweises auf die Patenterteilung: **29.05.1996**
(21) Anmeldenummer: 92924568.6
(22) Anmeldetag: 09.12.1992
(51) Int. Cl.: G05B 23/02

(54) **KARUSSELLTÜR**
REVOLVING DOOR
PORTE A TAMBOUR

(30) Priorität: 11.03.1992 DE 4207705
(43) Veröffentlichungstag der Anmeldung: 02.03.1994
(73) Patentinhaber: DORMA GmbH + Co. KG, D-58256 Ennepetal (DE)
(72) Erfinder: STARK, Jürgen, D-4320 Hattingen (DE)
(86) Internationale Anmeldenummer: DE9201040
(87) Internationale Veröffentlichungsnummer: WO9318444

(56) Entgegenhaltungen:
- EP-A- 0 296 134
- US-A- 4 376 971
- US-A- 4 468 768
- US-A- 4 817 045

## Beschreibung

Die Erfindung betrifft eine Karusselltür gemäß dem Oberbegriff des Patentanspruches 1. Eine derartige Karusselltür ist aus der EP 0 296 134 B1 bekannt geworden.

Karusselltüren benötigen einen hohen Sicherheitsstandard und sind deshalb mit den verschiedensten Sicherheitseinrichtungen ausgestattet. Dieses sind z.B. Sensorleisten, die an den Eingangspfosten der feststehenden Trommelwände befestigt sind. Bei einem Ansprechen dieser Sensoren wird das Drehteil der Karusselltür sofort stillgesetzt, um Gefahrenmomente zu beseitigen. Ferner sind Infrarotsensoren an der Decke möglich bzw. kapazitive Sensoren, die auf den Flügeln der Tür befestigt sind. Es können aber auch genausogut mechanische Kontaktleisten angebracht werden, die alle den gleichen Sinn haben, d.h. bei Berührung bzw. bei in den Bereich des Sensors kommenden Personen oder Teilen die Tür auf eine Langsamfahrt bzw. zum Stillstand gebracht wird, d.h. der Antrieb der Tür, welcher auf motorische Art und Weise durchgeführt wird, muß entsprechende Befehle erhalten. Die Antriebsmotoren können neben Gleichstrommotoren auch Wechselstrommotoren sein, die entsprechend mit einem Regler bzw. Frequenzumrichter versehen sein müssen, um eine Regelung der Drehzahl zu erreichen. Zur Messung der Drehzahl des verwendeten Motors kann beispielsweise ein Tachogenerator bzw. ein Inkrementalgeber verwendet werden.

Die Solldrehgeschwindigkeit der Karusselltür kann z.B. neben einer Grundgeschwindigkeit auch eine Behinderten- und eine Gehgeschwindigkeit beinhalten. Diese Geschwindigkeiten können über Sollwertvorgaben individuell den Bedürfnissen angepaßt werden. Die Steuerung der Tür kann entweder über eine speicherprogrammierbare Steuerung bzw. über eine Relaissteuerung oder MP-Steuerung realisiert werden.

In cer Regel stehen bei nicht frequentierten Türen die Türflügel still, d.h. der Innen- und Außenbereich ist durch die am Drehkreuz befestigten Flügel abgeschlossen. Beim Annähern einer Person wird über Infrarotmelder oder Radarmelder die Steuerung aktiviert, und die Tür beginnt zu laufen. Dieses könnte beispielsweise eine Gehgeschwindigkeit sein, die nach dem Verlassen der Tür durch die Person wieder auf eine Grundgeschwindigkeit, welche reduziert gegenüber der Gehgeschwindigkeit ist, herabgesetzt werden. Damit die Tür aber nicht ständig weiterläuft, wird in der Regel nach einstellbaren Umdrehungen die Tür dann zum Stillstand gebracht.

Diese Art von Türen lassen sich z.B. für den Nachtbetrieb verriegeln, was automatisch in einer Grundposition über elektrisch herausfahrbare Bolzen geschieht.

Da die Türen aufgrund ihrer großen Flügelbreiten eine enorme Schwungmasse haben, ist es schwierig, diese Drehbewegung innerhalb kürzester Zeit zum Stillstand bzw. zur Reversierung zu bringen. Dieses ist nur mit Hilfe einer entsprechenden Steuerelektronik in Verbindung mit Bremselementen möglich.

Die Aufgabe der Erfindung ist es, eine Karusselltür der eingangs genannten Art zu schaffen, die sich durch einen fast vollständig automatisierten Steuerungsablauf, insbesondere im Hinblick auf die Optimierung der Betriebssicherheit für den Benutzer, auszeichnet.

Erfindungsgemäß wird die Aufgabe durch die im Kennzeichen des Hauptanspruches festgehaltenen Merkmale gelöst.

Die Steuerung der Drehgeschwindigkeit, welche unterschiedlich für verschiedene Anwendungsbereiche ist, wird durch eine zentrale Datenverarbeitungseinheit gewährleistet. In dieser Datenverarbeitungseinheit wird im Rahmen eines Ablaufprogrammes all das an Informationen verarbeitet, welches über externe Sensoren z.B. Infrarot- oder Radarmelder oder Taster und in Verbindung mit den vorgegebenen Drehgeschwindigkeiten, welche voreingestellt, z.B. über Potentiometer gewählt, werden können. Gleichzeitig muß von dem angeschlossenen Motor eine Rückmeldung erfolgen, die z.B. von einem Inkrementalgeber ein entsprechendes Impulsmuster liefert bzw. von einem Tachogenerator, der einer der Motordrehzahl proportionale Spannung liefert. Um im Gefahrenfall die Tür unmittelbar zum Stillstand zu bringen, ist auch eine Bremse angeschlossen, deren Befehle im Frequenzumrichter oder in der Motorregelung bzw. in der Steuerung und im Mikroprozessor verarbeitet werden.

über den verwendeten Mikroprozessor wird gleichzeitig ein Multitasking-Betriebssystem verarbeitet, weil in diesem Fall besonderer Wert auf die sicherheitstechnischen Belange der Karusselltür gelegt wird. Dieses wird insbesondere dann deutlich, wenn man sich die nachfolgend beschriebenen kontinuierlich ablaufenden Tests der einzelnen Operationsprogramme verdeutlicht.

Dabei ist es die komplexe Aufgabe eines Multitasking-Betriebssystemes, die Datenverarbeitung in fest umrissene Ablaufprogramme zu untergliedern, die einzeln betrachtet leicht verständlich sind, und demnach entsprechend vereinfacht werden können und auch für den Servicetechniker keine Probleme bereiten, da er im Falle einer Störung defekte Komponenten einfach und leicht austauschen kann. Das Multitasking-System prüft insbesondere die Systemkomponenten CPU, RAM und ROM auf ihre Funktionsfähigkeit.

Im Wege der Steuerung der einzelnen Operationsprogramme ist es notwendig, auch prioritätsgesteuertes Starten bzw. Sicherheitsüberwachungen durchzuführen. Dieses ist insbesondere dann notwendig, wenn bestimmte Funktionen in einem vorgegebenen Muster ablaufen sollen.

Als Besonderheit ist eine Zeitverwaltung integriert, die aus zwei unabhängigen Zeitbasen besteht, was insbesondere für die Sicherheitssysteme einen wesentlichen Aspekt darstellt. Der erste Timer erzeugt z.B. den Betriebssystemtakt, wobei der zweite unabhängige Timer für einen Watch-Dog zur Verfügung steht. Dieser Watch-Dog muß zyklisch von einem Task getriggert werden, damit dieser nicht einen unvermeidbaren CPU-Reset erzeugt. Dieses Verfahren garantiert einen sehr hohen Schutz für den Betreiber und Benutzer einer Karusselltür.

Da bei dem erfindungsgemäßen Gegenstand die sicherheitstechnischen Belange im Vordergrund stehen, ist es notwendig, daß alle relevanten Rechnerkomponenten auch intern geprüft werden können und müssen. Dabei werden diese Komponenten wie CPU, Programmspeicher (EPROM kurz ROM) und Datenspeicher (RAM) im einzelnen getestet. Beim CPU-Test ist die Prozedur voll auf die aktuelle CPU abgestellt. Es handelt sich hierbei um einen hochwertigen CPU-Test, der folgende Teiltests enthält: Registertest, CPU-Status-Wort-Test, Test der Abfragemöglichkeiten, sonstige Tests. Da die Prozedur dieses Testes jeweils einen Ausgang für einen gutes und ein schlechtes Testergebnis hat, muß das aufgerufene Programm danach dann entsprechend reagieren.

Beim Registertest wird die Schreib-Lese-Fähigkeit des Registers einschließlich des übersprechens zwischen einzelnen Bits geprüft. Jedes CPU-Register wird mit verschiedenen Bit-Mustern beschrieben. Anschließend wird das Register wieder gelesen, wobei das Ergebnis mit der Sollvorgabe verglichen wird. Somit wird beispielsweise ein Unterprogramm mit definierter Rückkehr geprüft, was eine Prüfung verschiedener Returnadressen beinhaltet. Fehlerhafte Funktionen werden über den Fehlerausgang gemeldet.

Beim CPU-Status-Wort-Test wird geprüft, ob die Setz- und Rücksetzbarkeit der Statuswörter ordnungsgemäß durchgeführt wird. Auch hier wird eine entsprechende Auswertung vorgenommen.

Das Multitasking-Betriebssystem muß selbstverständlich mehrere Operationsprogramme und Ablaufprogramme verwalten können. Ein Operations- oder Ablaufprogramm im Sinne der Spezifikation ist ein abstrakter Datentyp oder eine Operationsmenge. Dieses Paket ist für die komplette Verwaltung zuständig. Ein Operationsprogramm ist ein Programm, welches in sich abgeschlossen ist und eine definierte Aufgabe zu erfüllen hat. Es kann über Schnittstellen auf externe Geräte zugreifen, so daß diese Aufgabe auch richtig erfüllt werden kann.

Im Grunde genommen ist die Operationsprogrammverwaltung eine Prioritätensteuerung mit Selbstaufgabe. Für jedes Operationsprogramm sind alle relevanten Daten in einem Speicher gespeichert. Dabei sind mehrere Speicher in einem Vektor hintereinander angeordnet, und die Reihenfolge bestimmt die Priorität eines Operationsprogrammes. Das gesamte Paket verwaltet für jedes Operationsprogramm getrennt den jeweiligen Programmstatus. Der Programmstatus sagt aus, ob ein Operationsprogramm lauffähig ist oder sich im Wartezustand befindet.

Es ist auch möglich ein Operationsprogramm mit einer Zeitverzögerung zu starten. Mit dieser Funktion kann ein beliebiges Operationsprogramm von einem anderen Operationsprogramm gestartet werden. Damit die Operationsprogramme auch in sich getestet werden, werden sie insofern auch übergeordnet zeitlich überwacht. Diese überwachung der Operationsprogramme läuft in einer Schleife ab.

Eine ganz entscheidende Forderung für ein Mikroprozessorsystem, welches als Sicherheitssystem eingesetzt wird, ist das Vorhandensein einer zweiten Zeitbasis. Diese zweite Zeitbasis ist beim vorliegenden erfindungsgemäßen Gegenstand ein Watch-Dog. Dieser Watch-Dog wird durch einen Triggerimpuls ständig angestoßen und gibt in dem Augenblick ein Fehlersignale, wenn er nicht rechtzeitig getriggert wird.

Die vorbeschriebenen Tests der einzelnen Operationsprogramme im Ablaufprogramm haben die Aufgabe, das sicherheitsrelevante Niveau einer Karusselltür und deren Steuerung zu heben. So wird beispielsweise ständig geprüft, ob die Abschaltrelais funktionieren und die CPU in einzelnen Schritten getestet, sowie eine ROM-Prüfung und ein nichtzerstörender RAM-Test segmentweise durchgeführt. In einem Fehlerfall wird eine Fehlerroutine angesprochen, die den externen Steuerungsausgängen signalisiert, daß ein Fehler vorliegt. Es wird die Notabschaltung gestartet und auch überprüft, ob die Notabschaltung stattgefunden hat. Dabei wird der Motor ausgeschaltet und die Bremse eingeschaltet. Gleichzeitig wird eine Anzeige aktiviert, die signalisiert, daß das System weitgehend isoliert ist.

Desweiteren wird von der programmierbaren Steuerung überprüft, daß der Motor nicht eingeschaltet ist und auch gleichzeitig die Bremse eingeschaltet wird. Eine überprüfung der Tachospannung geht dahin, daß ein maximaler Wert, welcher ein Maß für die Drehgeschwindigkeit der Karusselltür ist, nicht überschritten wird. Ebenfalls wird überprüft, daß bei eingeschaltetem Motor die Tachospannung nach einer definierten Zeit nicht mehr der Stillstandspannung entspricht. Dabei lernt ein Organisationsprogramm auch nach einer definierten Zeit bei einem Drehzahlwechsel die entsprechend dem Tacho abgegebene Spannung. Hierdurch wird erreicht, daß in Abhängigkeit der Tachospannung die entsprechende Drehzahlvorgabe eingehalten wird. Es kann somit kein Fehler auftreten. Tritt bei einem Test auch nur der kleinste Fehler auf, so wird durch einen Programmschritt das entsprechende Operationsprogramm im Ablaufprogramm weitestgehend isoliert, und es wird eine kontrollierte Notabschaltung durchgeführt. Dieses kann z.B. die Ansteuerung eines externen Relais bedeuten, oder aber auch ein zusätzliches Abschaltrelais kann angesteuert werden. Auch ist es möglich, weitere zusätzliche Funktionen, die bisher nicht ausführlich beschrieben wurden, mit Hilfe dieses Systems überwachen und durchführen zu lassen.

Es wird anhand des in den Zeichnungen schematisch dargestellten Ausführungsbeispieles die vorliegende Erfindung näher erläutert. Es zeigt:
- Figur 1:: Regelkreis einer Karusselltür
- Figur 2:: Blockdiagramm, das die wesentlichen Elemente der Steuerbefehlsverarbeitung zeigt

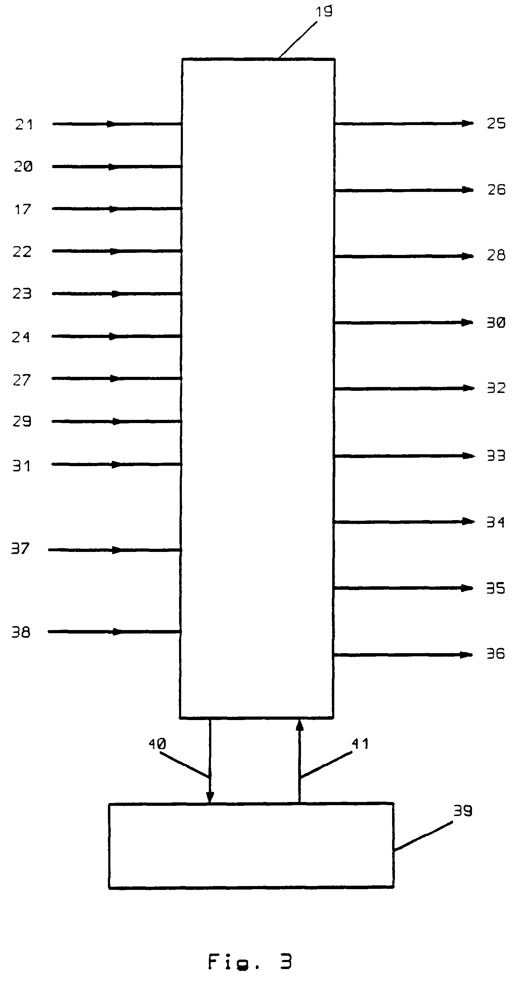

- Figur 3:: Blockdiagramm, das die wesentlichen Elemente eines zentralen Rechners zeigt
- Figur 4:: Blockdiagramm, das die wesentlichen Elemente einer überwachung der programmierbaren Steuerung darstellt
- Figur 5:: Blockdiagramm, das die wesentlichen Elemente des Integrationsverfahrens der Regelabweichung darstellt
- Figur 6:: Blockdiagramm, das die wesentlichen Elemente einer Motorüberwachung zeigt
- Figur 7:: Blockdiagramm, das die wesentlichen Elemente der Bremsüberwachung zeigt
- Figur 8:: Blockdiagramm, das die wesentlichen Elemente der Sicherheitsüberwachung zeigt
- Figur 9:: Blockdiagramm, das die wesentlichen Elemente der Sicherheitsüberwachung des Türstillstandes darstellt
- Figur 10:: Blockdiagramm, das die wesentlichen Elemente der überwachung der Langsamfahrt darstellt
- Figur 11:: Blockdiagramm, da die wesentlichen Elemente der Notabschaltung darstellt.

Bevor die Einzelheiten der Erfindung ausführlich diskutiert werden, wird auf folgende hauptsächliche Betrachtung hingewiesen, die sich auf einen typischen digitalen Rechner (Mikroprozessor) bezieht, wie er zuvor erwähnt wurde. Typischerweise weist ein Mikroprozessor 3 hauptsächliche Elemente auf,
a) eine zentrale Verarbeitungseinheit
b) einen Informationspeicher
c) eine Mehrzahl von Ein- und Ausgabeeinheiten.

Der Informationsspeicher dient dazu, Instruktionen und Daten zu speichern, wobei die Instruktionen codierte Informationsteile darstellen, die Aktivitäten der zentralen Datenverarbeitung beeinflussen, und wobei die Daten codierte Informationsteile darstellen, die von der zentralen Datenverarbeitung verarbeitet werden. Eine Gruppe von logisch bezogenen Instruktionen, die in dem Informationsspeicher gespeichert ist, wird als ein Programm bezeichnet. Die zentrale Datenverarbeitungseinheit liest demgemäß jede Instruktion des Informationsspeichers in einer logisch bestimmten Reihenfclge und benutzt sie, um die Prozessaktionen anzuregen. Wenn die Instruktionsfolge zusammenhängend und logisch ist, dann produziert das Programm verständliche und gewünschte Resultate, ansonsten wird eine Fehlermeldung erzeugt.

Wie bereits erwähnt, wird der Informationsspeicher benutzt, um die zu manipulierenden Daten ebenso wie die die Manipulation beeinflussenden Instruktionen zu speichern. Die zentrale Verarbeitungseinheit kann schnell irgendwelche in dem Informationsspeicher gespeicherte Daten zugänglich machen und enthält Zwischenspeicherregister. Des öfteren sind die Daten zur Verarbeitung im voraus nicht bekannt oder können nicht aus existierenden Informationen hergeleitet werden. Dieses Problem wird dadurch gelöst, daß der Mikroprozessor mit einer oder mehreren Eingabe- und Ausgabeeinheiten versehen ist. Die zentrale Verarbeitungseinheit adressiert dann diese Einheiten und bewirkt die Eingabe und Ausgabe der Daten von oder zu externen hiermit gekoppelten Einrichtungen. Eine alternierende Methode mit der Kommunikation mit externen Einrichtungen ist die, jeder Einrichtung eine einzige Adresse zuzuordnen, wodurch es der zentralen Datenverarbeitungseinheit möglich ist, die Einrichtungen als Speicherplätze zu behandeln. Dabei kann z.B. der Ausgang zu einer Anzeige führen, die für den Benutzer vorgesenen ist oder zu einer peripheren Einrichtung, wie z.B. einer Speichereinheit oder es können Prozess-Steuersignale gebildet werden, die die Operationen von einem anderen System beeinflussen.

Die der Erfindung zugrundeliegende Aufgabe ist auf eine Sicherheit-überwachte Steuerung einer Karusselltür ausgerichtet.

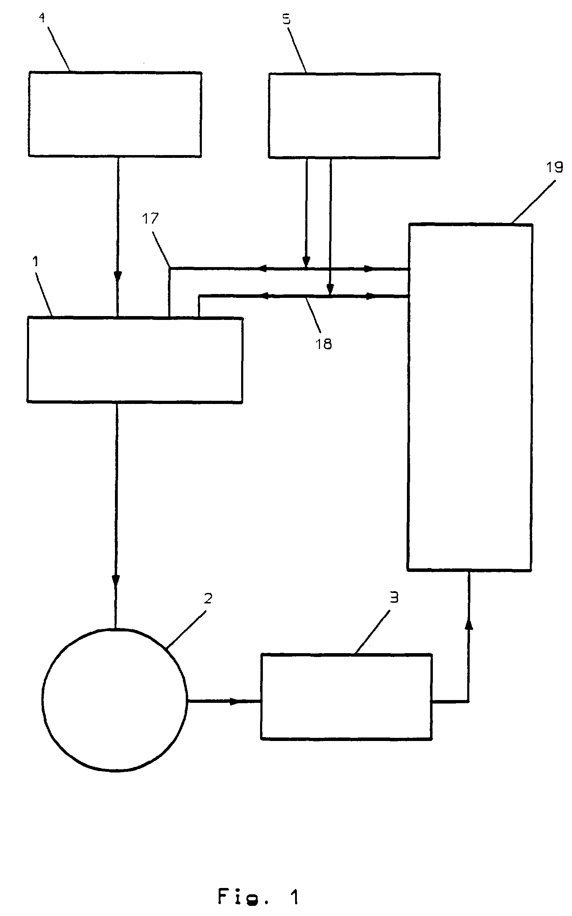

Der Motor (2) der nicht dargestellten Karusselltür kann sowohl ein Gleichstrom- als auch Wechselstrommotor sein. Mit dem Motor fest verbunden ist ein Tachogenerator (3) oder auch ein Inkrementalgeber. Der Tachogenerator (3) liefert eine der Umdrehung des Motors proportionale Spannung, welche sich innerhalb eines vorgegebenen Rahmens bewegen muß. Wird ein Inkrementalgeber statt des Tachogenerators (3) verwendet, so werden Impulse erzeugt, die an den zentralen Mikroprozessor (Rechner) (19) geführt werden. Angesteuert wird der Motor (2) über einen Motorregler (1), der entsprechend dem verwendeten Motortyp entweder ein Regler oder ein Frequenzumrichter sein kann. über die Sollwertvorgabe (4) wird dem Motorregler (1) die gewünschte Drehzahl vorgegeben. Diese Vorgabe kann durch beispielsweise innerhalb der Sollwertvorgabe vorhandene Potentiometer oder aber auch digital erfolgen. Gleichzeitig wird auch von der programmierbaren Steuerung (5) dem Motorregler (1) eine Regelfreigabe (18) erteilt. Diese Regelfreigabe (18) geht auch gleichzeitig an den zentralen Rechner (19). Soll die Tür zum Stillstand gebracht werden, so wird die Regelfreigabe in ein Bremssignal (17) getauscht, was eine nicht dargestellte Bremse aktiviert. Gleichzeitg wird die Sollwertvorgabe (4) auf Null gesetzt. Das Bremssignal (17) wird auch dem zentralen Rechner (19) zugeführt. Wie die Beschreibung zeigt, ist das in Figur 1 dargestellte Schema ein in sich geschlossener Regelkreis.

Bei der Sollwertvorgabe (4) können beispielsweise drei verschiedene Geschwindigkeiten vorgegeben werden. Dieses können z.B. eine Grundgeschwindigkeit, eine Behindertengeschwindigkeit und eine normale Gehgeschwindigkeit sein. Eine individuelle Anpassung ist über die Sollwertvorgabe (4) für die verschiedensten Türtypen als auch für die verschiedensten Gegebenheiten möglich.

Bei der programmierbaren Steuerung (5) handelt es sich um eine zentrale Steuereinheit, die entweder digital oder in Relaissteuerung aufgebaut sein kann. Hier gehen aufgrund von Meldungen z.B. Programmschalter, Radarmelder oder auch andere Befehlsgeräte Signale ein, die eine Regelfreigabe erzeugen oder aber auch ein Bremssignal wirksam werden lassen. Ein Anwendungsfall wäre z.B., daß beim Stillstand der Tür im Normalfall erst beim Betreten der Tür eine Rotationsbewegung der Flügel einsetzt. Nach dem Verlassen kann die Tür noch eine Umdrehung weiterlaufen und geht dann, wenn keine neue Person in den Türbereich eintritt, wieder in den Stillstand zurück. Genausogut ist es möglich, daß die Tür mit einer Grundgeschwindigkeit, die langsamer ist als die normale Gehgeschwindigkeit, läuft und erst dann, wenn der Radarmelder oder Infrarotmelder ein Begehen der Tür signalisiert, in eine andere Geschwindigkeit umschaltet. Genausogut geht die Verriegelungssensorik, wie z.B. Windbremse oder aber auch Nachtverriegelung, als Steuersignal in die programmierbare Steuerung (5) ein. Wenn ein oder mehrere Flügel der Tür weggeklappt sind, darf eine Verriegelung und damit auch keine Fahrt der Tür möglich sein.

Für behinderte Personen besteht die Möglichkeit, außen an der Tür einen sogenannten Handicap-Taster zu betätigen. Bei der Betätigung dieses Tasters läuft die Tür automatisch langsamer, was insbesondere für ältere Menschen eine bessere Begehung der Tür ermöglicht. übergeordnet zu allen anderen Funktionen ist auch ein Sicherheitsstopp möglich, der durch eine besondere Sensorik ausgelöst wird, in diesem Falle kommt die Tür sofort automatisch zum Stehen.

Bei heute auf dem Markt befindlichen Sicherheitsdrehtüren ist auch eine sogenannte Sicherheitslangsamfahrt (14) möglich, die dann ausgelöst wird, wenn eine Person sich in einem bestimmten Sicherheitsbereich befindet und nicht zu Schaden kommen soll. In diesem Falle geht die Tür in eine niedrigere Geschwindigkeit und hält somit Schaden von der sich innerhalb der Tür befindlichen Person ab.

Karusselltüren haben eine bevorzugte Grundstellung (116), die so ausgerichtet ist, daß z.B. bei einer vierflügeligen Tür sowohl zum Innen- als auch zum Außenbereich ein Kabinett der Tür frei zugänglich ist. In dieser Stellung ist auch eine Türverriegelung (16) möglich, welche über elektrisch betriebene Verriegelungen realisiert wird.

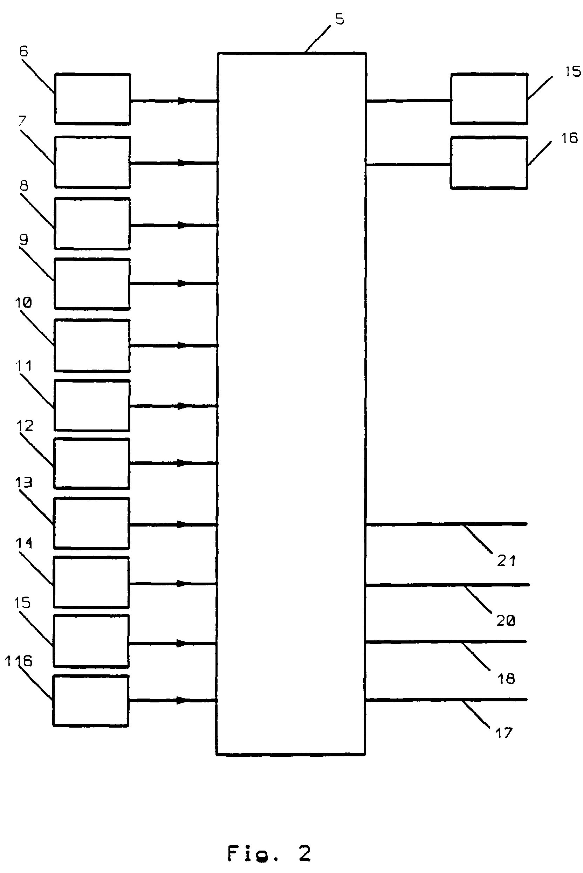

In der Figur 2 ist die programmierbare Steuerung (5) als Blockschaltbild dargestellt, um deutlich zu machen, welche Befehlseingänge und -ausgänge vorzugsweise vorhanden sind. über die Befehlseingänge (6), (7) und (8) können beispielsweise Befehle externer Taster oder Melder oder Sensoren in die programmierbare Steuerung (5) eingelesen werden. über den Eingang (9), welcher für Bewegungssensoren vorgesehen ist, wird der programmierbaren Steuerung (5) signalisiert, wenn sich innerhalb eines Sensorbereiches, sei es Infratrot oder Radar, eine Person befindet. Die bereits vorbesprochene Flügelverriegelung kann über den Eingang (10) gemeldet werden. An dem Eingang (11) befindet sich die Verriegelung für die Verriegelungssensorik. Der Befehl des Handicap-Tasters (12) und der Befehl des Sicherheitsstopps (13) werden ebenfalls an die programmierbare Steuerung (5) geliefert. Wird von einem Sensor signalisiert, daß sich Personen in irgendeinem Gefahrenbereich befinden, der nicht zum Stillstand der Tür führen muß, wird über den Sicherheitseingang (14) eine Langsamfahrt der programmierbaren Steuerung (5) signalisiert. Befindet sich die Karusselltür in der Grundstellung (116), so kann in dieser Stellung aufgrund weiterer Befehle die programmierbare Steuerung (5) eine Verriegelung der Tür vornehmen. Diese Position (116) der Grundstellung ist auch deshalb notwendig, um die Tür in ihren einzelnen Funktionen genau zu definieren. Bei Nachtbetrieb kann auch über einen weiteren Sensor eine Beleuchtung (15) über die programmierbare Steuerung (5) eingeschaltet werden.

Neben den vorbeschriebenen Eingängen hat die programmierbare Steuerung (5) auch Ausgänge, aie nach Verarbeitung der eingehenden Signale Befehle sowohl an den angeschlossenen Mikroprozessor (19) als auch an den Motorregler (1) geben. Hier ist besonders das Start-Stopp-Signal (20) zu nennen, welches eine Reglerfreigabe des Motorreglers (1) bewirkt und auch gleichzeitig dem Mikroprozessor (19) signalisiert, daß entweder die Tür gestartet werden kann bzw. in einen Stillstand verbracht werden muß. Aufgrund der angeschlossenen Sensorik können wie vorbeschrieben verschiedene Drehzahlvorgaben getätigt werden. Diese Drehzahlvorgaben werden in einem Drehzahlcode (21) an die Sollwertvorgabe (4) und auch gleichzeitig an den Mikroprozessor geliefert. Die Sollwertvorgabe (4) liefert aufgrund der entweder eingestellten Drehzahl bzw. der vorgegebenen Codedrehzahl (21) eine Drehzahlspannungsvorgabe (22), sowohl an den Motorregler (1) als auch wiederum zur Kontrolle an den Mikroprozessor (19). Entsteht aufgrund eines Fehlers innerhalb des Motorreglers (1) z.B. ein Frequenzumrichterfehler (23), so wird dieser an den Mikroprozessor (19) geliefert. Der Mikroprozessor (19) würde in diesem Falle eine Abschaltung des Systemes bewirken. Auch das Tachosignal (24) wird an den Mikroprozessor (19) geliefert, damit sichergestellt ist, daß bei einem Motordrehbefehl sich auch der Motor dreht und somit eine Rückmeldung zu erfolgen hat.

Erkennt der Mikroprozessor (19) einen Fehler irgendeiner Art, so wird über das Reglerstoppsignal (25) ein Befehl zur Regelfreigabeabschaltung abgegeben. Dieses bewirkt, daß der Motorregler (1) abgeschaltet wird und gleichzeitig das Bremssignal (17) gegeben wird. Neben der Regelvorgabenabschaltung kann auch noch über einen weiteren Pfad eine zusätzliche Sicherheit erreicht werden, indem über den Ausgang (26) des Mikroprozessors (19) der Frequenzumrichter vom Netz getrennt wird. Auch hier wird der Ausgang über eine Rückmeldungslinie (27) überwacht, um sicherzustellen, daß der Freuqenzumrichter abgeschaltet wird. Wird ein Wechselstrommotor verwendet, so ist es notwendig, auch diesen von dem Frequenzumrichter zusätzlich abzuschalten, damit keine Rückwirkungen in den Frequenzumrichter laufen. Dieses wird über einen weiteren Befehl (28), der wiederum rückgemeldet wird, über die Verbindung (29) zum Mikroprozessor (19) erreicht. Ist die erfolgreiche Abschaltung des Motor durchgeführt, so wird über die Meldelinie (30) ein Bremssignal an den Motor gegeben, der wiederum auch über die Verbindung (31) an den Mikroprozessor (19) rückgemeldet wird.

Bei Auftreten irgendeines der auswahlweise vorbeschriebenen Fehler wird eine Sammelstörmeldung (32) auf einen potentialfreien Kontakt gemeldet. Hier können beliebige Signalgeräte angeschlossen werden.

Aufgrund der gewählten Ausführung werden alle logischen Zustände auf Plausibilität abgefragt, d.h. z.B. Reglerstopp danach Bremse einlegen und Stillstand des Motors abfragen. Wird diese Reihenfolge nicht eingehalten, so erkennt das System, daß ein Fehler vorliegt, und es würde eine Notabschaltung eingeleitet. Auch in diesem Fall wird weiterhin überprüft, ob sich die Drehzahl verringert und die Bremse eingelegt ist. Sind alle Befehle ordnungsgemäß ausgeführt worden, dann arbeitet die programmierbare Steuerung (5) entsprechend den Vorgaben. Aufgrund dieser Gegebenheiten ist es möglich, aus dem Mikroprozessor (19) auch eine Fehlermeldung zu erhalten, wo sich im Falle des Falles ein Fehler innerhalb des Systemes eingeschlichen hat. Hierfür sind z.B. die Ausgänge (33) vorgesehen, die melden, wann ein Fehler im Rechner selbst aufgetreten ist. Ist ein Fehler im Bereich der Bremse eingetreten, so wird dieses über den Ausgang (34) dem Betreiber mitgeteilt. Ein Fehler des Reglers wird über den Pfad (35) signalisiert. Ist gar in der programmierbaren Steuerung (5) ein Fehler aufgetreten, so wird dieser über die Fehlermeldung (36) nach außen hin signalisiert. Durch diese Verquickung wird der Prozessor (19) selbst überwacht.

Neben den bereits erwähnten Eingängen befindet sich am Mikroprozessor (19) ein weiterer Eingang, der bei Aktivierung eine sofortige Stillsetzung der Karusselltür bewirkt, nämlich der Sicherheitsstopp (37). In diesem Falle würde zunächst das Reglerrelais abgeschaltet, dann der Regler zusätzlich vom Netz getrennt, und der Motor auch noch einmal vom Regler getrennt werden. Erst zuletzt wird die Bremse eingelegt. Hiernach wird weiterhin kontrolliert, ob sich die Drehzahl verringert, was aufgrund der anstehenden Drehzahl spannung oder Impulse innerhalb einer bestimmten Zeit geschehen muß. Als letztes wird der definitive Stillstand der Karusselltür überprüft.

Wird über einen externen Schalter z.B. den Handicap-Taster (12) der Befehl für die Langsamfahrt (38) gegeben, so geht dieses auch direkt an den Mikroprozessor (19). Damit der Mikroprozessor (19) aber auch mit seiner internen Zeitbasis selbstüberwacht wird, ist eine zweite Zeitbasis vorhanden, die in einem Watch-Dog-Timer (39) untergebracht ist. Dieser Watch-Dog-Timer (39) verarbeitet die von der Zeitbasis des Prozessors gelieferten Triggersignale (40) mit seiner internen Zeitbasis. Ist hier eine übereinstimmung gegeben, so wird ein Reset-Signal (41) an den Prozessor zur weiteren Bearbeitung und damit zum ungestörten Betrieb gegeben. Tritt ein Fehler innerhalb des gesamten Systemes auf, wird die Anlage stillgesetzt und kann erst durch einen Servicetechniker wieder neu gestartet werden. Dieses trifft auch für den Rechner zu, der sich selbst überwacht und im Fall des Auftretens eines Fehlers auch die gesamte Anlage stillsetzt. Alle Programmüberwachungen laufen im Millisekundenbereich ab.

Neben den bereits geschilderten Überwachungsprogrammen und Abläufen sind übergeordnete Operationsprogramme vorhanden, die den Ablauf der Systeme, d.h. aller Sicherheitsfunktionen noch einmal überwachen.

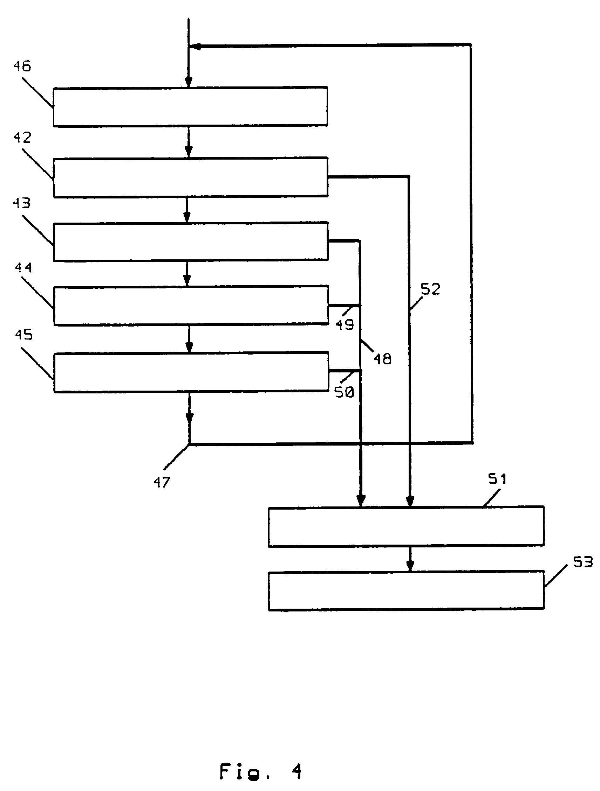

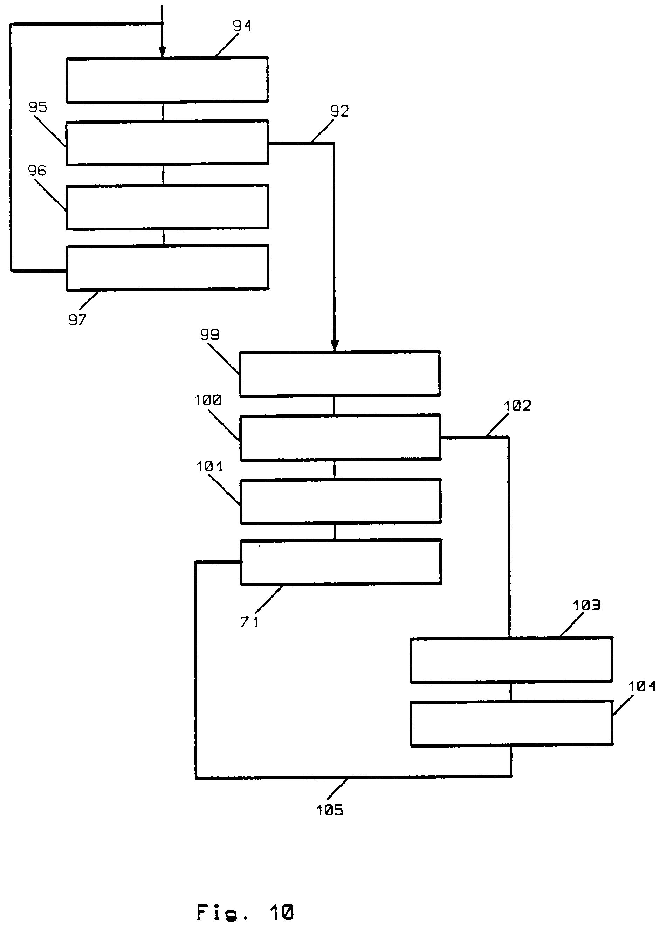

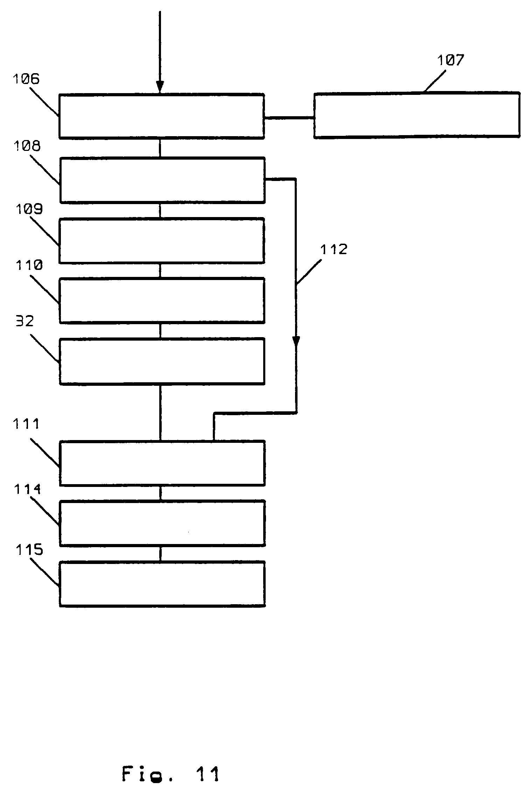

In den nachfolgend beschriebenen Figuren 4 bis 11 werden Teilaspekte, welche für den Sicherheitsbereich relevant sind und damit Operationsprogramme darstellen, beschrieben. All diese Operationsprogramme laufen in einem zeitlichen Rhythmus teilweise zeitgleich oder zeitversetzt je nach gewünschter Priorität ab. Wird so ein Operationsprogramm in seiner Ausführung zu einem bestimmten Zeitpunkt nicht verwendet oder gebraucht, so geht automatisch dieses Programm in den überwachungskreis und wird von dem Rechner (19) überprüft. Dadurch wird sichergestellt, daß alle sicherheitsrelevanten Bauteile in mehrfacher Hinsicht auf ihre Funktionsfähigkeit hin abgecheckt werden.

Das in der Figur 4 im Blockschaltbild dargestellte Operationsprogramm ist für die überwachung der programmierbaren Steuerung verantwortlich. Bei dieser programmierbaren Steuerung werden vor allen Dingen die Grundfunktionen überwacht. Wird diesem Operationsprogramm der Startbefehl (46) gegeben, so beginnt die Prüfung, ob bei laufendem Motor (Regelfreigabe 18) nicht zusätzlich auch das Signal (17) für die Bremse gegeben wird. Hier wird im Block (42) eine überprüfung vorgenommen, ob der Motor eingeschaltet und auch gleichzeitig die Bremse eingeschaltet sind. Ist neben dem Motor auch die Bremse eingeschaltet, so gibt es über den Pfad (52) eine Fehlermeldung an die Antriebsfehlereinheit (51), die diesen Fehler der Fehlerbearbeitung (53) weiterleitet, was zu einem Abschaltungsbefehl für die gesamte Anlage führen würde. Ist jedoch die Bremse nicht eingeschaltet und der Motor läuft, so wird im Block (43) eine Überprüfung der Tachospannung vorgenommen. Diese Tachospannung muß in einem bestimmten vorgegebenen Bereich liegen, weil ihr Signal ein Maß für die Motordrehzahl ist. Liegt die Tachospannung außerhalb des vorgegebenen Bereiches, so geht auch hier eine Fehlermeldung (48) an die Antriebsfehlermeldung, die diese weiterleitet an die Fehlerbearbeitung (53). Liegt die Tachospannung im vorgegebenen Bereich, so wird weiterhin überprüft, ob bei stehendem Motor die Tachospannung nach einer Zeit x noch größer als Null ist. Ist dieses der Fall, so wird über den Block zur Überprüfung des Motor-Tacho (44) eine Fehlermeldung über (49) und (48) an die Antriebsfehlermeldung (51) und Fehlerbearbeitung (53) weitergegeben. Ferner wird noch überprüft, ob bei eingeschaltetem Motor die Tachospannung gleich gegen Null sich bewegt. Auch dieses ist ein Fehler, und er wird über die Fehlermeldung (50) an die Antriebsfehlermeldung (51) weitergeleitet. Da dieses Operationsprogramm als Teil einer Kette von Operationsprogrammen im Ablaufprogramm zu sehen ist, geht über die Rückmeldung (47) der Befehl an den Start (46), um erneut eine Überprüfung des Ablaufes zu gewährleisten. Mit der Fehlerbearbeitung (53) wird extern ein Relais geschaltet, was die Anlage stillsetzt. Ferner wird gleichzeitig ein zweites Bremsrelais gesetzt, was zur Folge hat, daß die Karusselltür zum Stehen kommt. Natürlich wird in einem solchen Fall auch das Operationsprogramm unterbrochen sowie alle weiteren Operationsprogramme. Ein erneuter Startvorgang der Karusselltür kann nur durch ein externes Signal erfolgen.

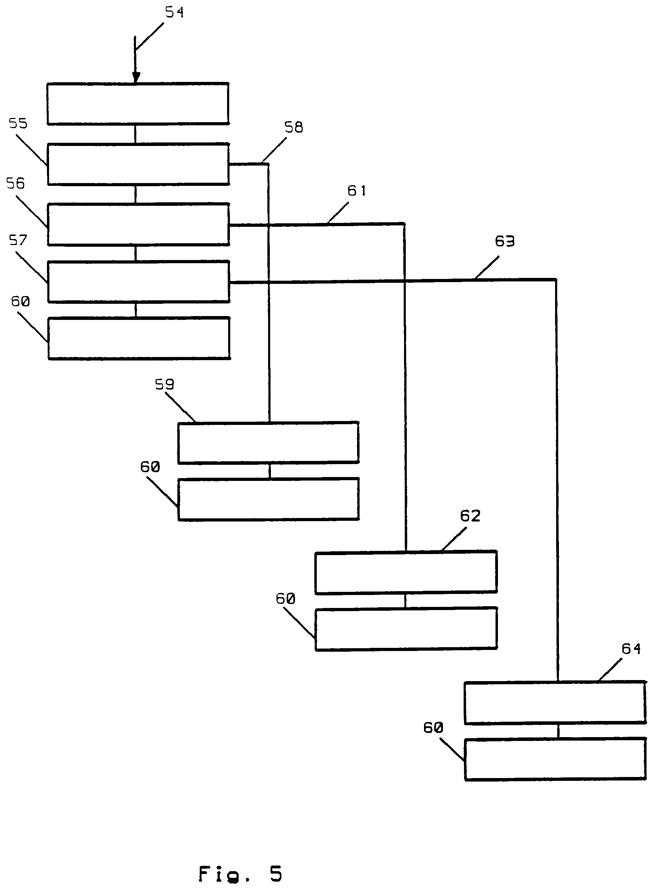

In der Figur 5 ist in einem Regelblock das Integrationsverfahren der Regelabweichung beschrieben. Das Verfahren speichert stets einen gültigen Wert in einer Zelle, wo dann zyklisch der aktuelle Analogwert eingelesen und integriert wird. Hierbei ist wichtig, daß bei überschreiten des Sollwertes, der dann gültige Sollwert wieder übernommen wird. Der Vorteil dieses Verfahrens liegt darin, daß stets der aktuelle Wert in den Grenzen einer vorgegebenen Hysterese zur Verfügung steht. Das Verfahren hat darüber hinaus folgenden Vorteil, daß auch kleinste Änderungen, zwar nach einer gewissen Zeitverzögerung, übernommen werden. Dagegen werden große Änderungen sofort wirksam. Eventuell überlagerte Schwingungen werden herausgefiltert und dann vorzeichenrichtig berechnet.

Das Operationsprogramm erhält seinen Start über den Befehl (54). Es wird zuerst abgefragt, ob eine der bereits vorbeschriebenen drei verschiedenen Geschwindigkeiten vorgewählt ist. Ist die Langsamfahrt vorgewählt, so wird über den Block (55) gemeldet, daß eine Langsamfahrt vorliegt und die Information über den Pfad (58) an den Differenzbildner (59) weitergegeben. Hier wird die Differenz zwischen dem anstehenden und dem vorgewählten Wert gebildet. Gleichzeitig wird die Differenz mit den gespeicherten Delta-Werten vorzeichenrichtig verrechnet und gespeichert und über die Rückmeldung (60) an das System geliefert. Ist jedoch eine Langsamfahrt (55) nicht angewählt, so wird als nächster Schritt die Behindertenfahrtgeschwindigkeit (56) abgefragt. Liegt hier eine Meldung vor, so wird über den Informationspfad (61) die Differenz mit dem gespeicherten Analogwert gebildet. Dieses wird im Differenzbildner (62) durchgeführt, wo auch wiederum eine Differenz zwischen den gespeicherten Delta-Werten vorzeichenrichtig verrechnet und gespeichert wird. Die aktuelle Information geht über die Rückmeldung (60) an das System zurück. Ist auch die Behindertengeschwindigkeit (56) nicht angesprochen, sondern die normale Gehgeschwindigkeit (57), so wird dieses als Information über die Leitung (63) an einen weiteren Differenzbildner (64) gegeben, wo in gleicher Weise wie bereits vorbeschrieben, die Differenz und der aktuelle Wert gebildet werden. Auch hier wird eine Rückmeldung über (60) an das System erfolgen.

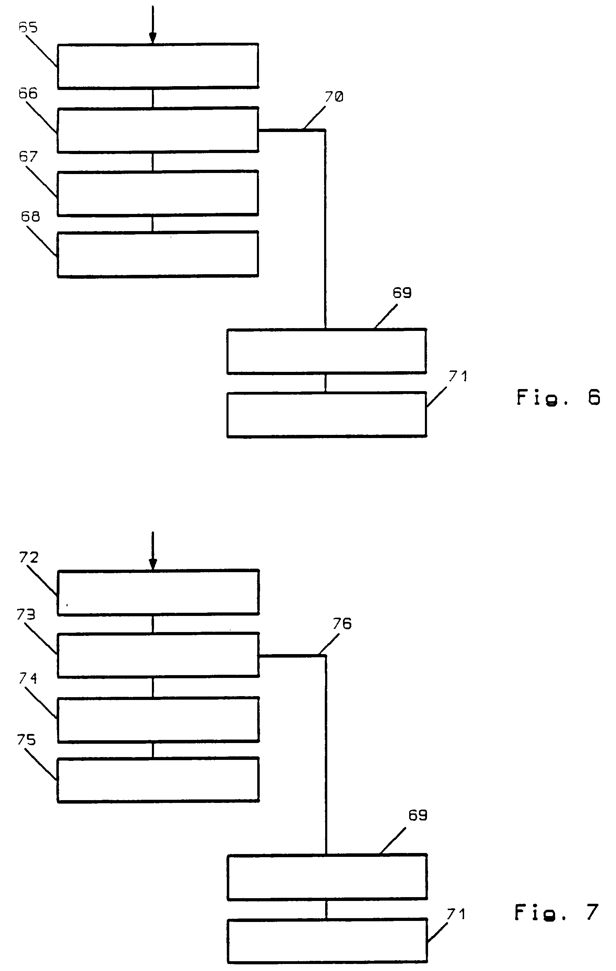

Der Sicherheitsstopp für die überwachung Motor-Aus wie er in Figur 6 beschrieben ist, ist eine Funktion, welche für die überwachung der Steuerung (5) in bezug auf das zeitlich richtige Absetzen der Befehle zuständig ist. Geschieht diese überwachung nicht, wird automatisch die zwangsweise Notabschaltung durchgeführt. über den Befehl (65) wird das Startsignal zur Prüfung der Motorüberwachung gegeben. Liegt kein Motorbefehl (66) vor, so wird eine Fehlermeldung (70) abgesetzt, die ein Zeitglied (69) aktiviert, welches nach einer vorgegebenen Zeit die Fehlermeldung herausgibt und über (71) die Notabschaltung durchführt. Liegt ein Motor-Aus-Befehl (66) vor, so wird die Motorüberwachung (67) ausgeschaltet und die Bremsenüberwachung (68) wird aktiviert.

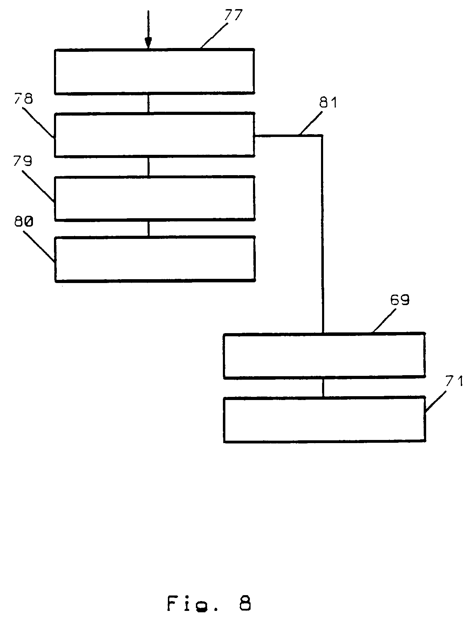

Auch der in der Figur 7 beschriebene Ablauf der Bremsenüberwachung ist analog dem der Motorüberwachung anzusehen. Nach einem Startbefehl (72) wird überprüft, ob ein Bremsenbefehl vorliegt. Liegt dieser Befehl nicht vor, so wird über eine Fehlermeldung (76) wiederum ein Zeitglied (69) aktiviert, was nach Ablauf der vorgegebenen Zeit eine Notabschaltung (71) durchführt. Ist jedoch der Bremsenbefehl (73) positiv, so wird die Bremsenüberwachung (74) ausgeschaltet und es wird die Stillstandsüberwachung (75) der Bremse aktiviert.

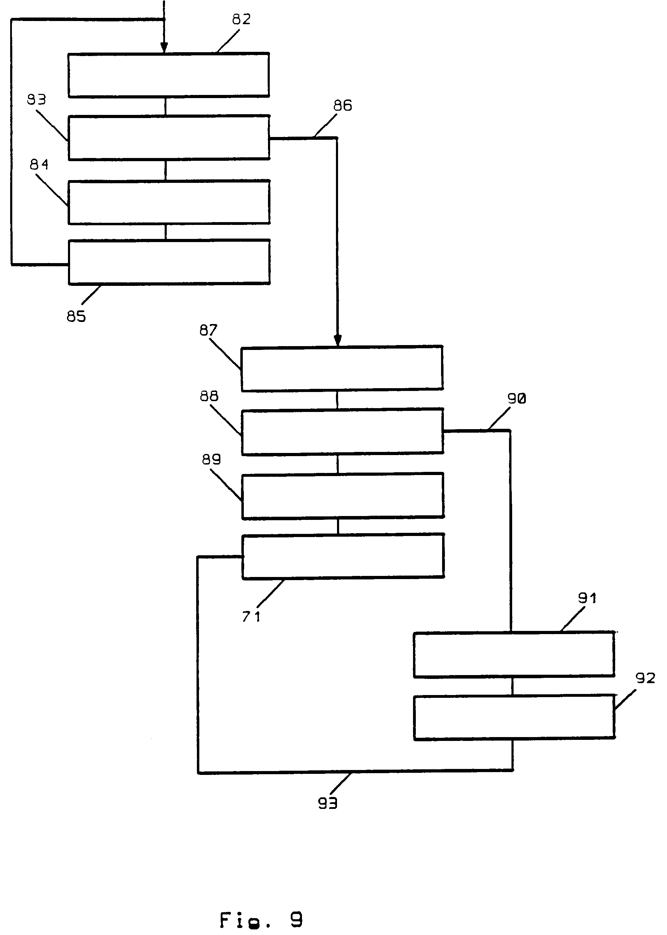

Auch die Langsamfahrt, und damit die überwachung des Motors, wird, wie in der Figur 8 dargestellt ist, überwacht. Auch dieses Operationsprogramm erhält einen Startbefehl (77), welcher überprüft, ob die Motorüberwachung (78) eingeschaltet ist oder nicht. Ist sie nicht eingeschaltet, so wird eine Fehlermeldung (81) an ein Zeitglied (69) gegeben und nach dessen zeitlichem Ablauf die unverzügliche Notabschaltung (71) ausgeführt. Ist jedoch die Motorüberwachung eingeschaltet, so wird sie nach überprüfung ausgeschaltet, und die Langsamüberwachung (80) wird aktiviert, die dann die weitere Drehgeschwindigkeit des Motors überwacht.

Da bei der Auslegung des gesamten Ablaufprogrammes der Sicherheitsaspekt eine übergeordnete Rolle spielt, wird auch der Stillstand der Tür überwacht. Hier wird insbesondere die Steuerung (5) dahingehend überwacht, daß der zeitlich richtige Ablauf der Befehle durchgeführt wird, gleichzeitig wird aber auch der Antrieb mit Motorregler und Tachogenerator mit überprüft. Im Fehlerfall wird automatisch die zwangsweise Notabschaltung durchgeführt. Der Startbefehl (82) aktiviert die Analogwertüberprüfung (83). Liegt kein Analogwert (83) vor, so wird der Ist-Wert (86) an einen Vergleicher (87) weitergegeben, welcher überprüft, ob der Soll-Wert und der Ist-Wert innerhalb einer bestimmten Bandbreite liegen. Ist der Ist-Wert innerhalb des bestimmten vorgegebenen Bereiches, so wird in einem Speicher (88) dieser Wert abgespeichert. Ein nachgeschaltetes Zeitglied (89) überprüft, ob in der festgesetzten Zeit die Regelabweichung behoben ist. Ist dieses nicht der Fall, so wird über die Notabschaltung (71) der Antrieb nochmals stillgesetzt. Auch diese Antriebsstillsetzung (71) wird über die Rückmeldung (93) rückgemeldet und damit nochmals überwacht. Ist der Soll-Ist-Wert-Vergleich (87) negativ ausgefallen, so wird diese Regelabweichung (90) an eine weitere überprüfung (91) gegeben. Hier wird ein neues Signal festgelegt, was eine Geschwindigkeitsreduzierung (92) zur Folge hat. Sollte jedoch der Analogwert (83) in den vorgegebenen Grenzen liegen, so wird dieser Befehl weitergeleitet an die überwachung-Aus (84), die wiederum nachgeschaltet den Startbefehl (85) für einen erneuten Start freigibt.

Auch die Überwachung der Tür in der Langsamfahrt wird dahingehend vorgenommen, daß die programmierbare Steuerung (5) auf Absetzung der richtigen Befehle überprüft wird, und auch gleichzeitig damit der Antrieb mit dem Motor und Regler und Tachogenerator durchgetestet wird. Auch hier wird in einem Fehlerfall automatisch eine zwangsweise Notabschaltung durchgeführt. Der Startbefehl (94) gibt das Startsignal zum Analogwertüberprüfer (95), der bei erfolgter überprüfung den Wert, sollte er innerhalb der Grenzen liegen, an die überwachung (96) weitergibt, die wiederum die überwachung ausschaltet und einen erneuten Startbefehl (97) für eine weitere andere Geschwindigkeit ermöglicht. Ist jedoch die Analogwertüberprüfung (95) negativ ausgefallen, so geht der momentane Ist-Wert (98) an einen Soll-Ist-Wert-Vergleicher (99), wo wiederum geprüft wird, ob innerhalb einer vorgegebenen Hysterese eine Regelabweichung liegt oder nicht. Liegt eine Regelabweichung vor, so wird diese Meldung (102) an die überprüfung (103) gegeben, und die Tür läuft dann mit der richtigen Geschwindigkeit weiter. Ist der Soll-Ist-Wert-Vergleich (99) negativ ausgefallen, d.h. der aktuelle Wert ist größer als der gespeicherte, so wird dieser Wert in dem Speicher (100) abgespeichert und dem Zeitglied (101) zugeleitet, was dann wiederum eine Notabschaltung (71) auslöst.

Das Organisationprogramm Notabschaltung führt eine selbsttätige zwangsweise Notabschaltung durch. Die Fahrbefehle werden alle auf Null gesetzt. Auch in diesem Falle findet eine ständige überwachung statt, die durch die Notabschaltung (106) aktiviert wird, wo abgefragt wird, ob die Notabschaltung durchgeführt werden muß oder nicht. Soll sie nicht durchgeführt werden, so wird die Meldung (107) an das System abgesetzt und die Karusselltür kann im normalen vorgewählten Turnus laufen. Soll jedoch eine Notabschaltung aktiviert werden, so wird in einem Zeitvergleich (108) geprüft, ob die Motorabschaltung erreicht worden ist. Ist diese Motorabschaltung nicht erreicht, so wird die Meldung (112) als Schaltbefehl abgegeben und einem Zeitvergleich (111) zugeführt. Dieser Zeitvergleich aktiviert einen Bremsbefehl (114), der dann wiederum die Notabschaltung aufhebt, nachdem die Tür zum Stillstand gekommen ist. Ist der Zeitvergleich (108) so ausgefallen, daß der Zeitpunkt für die Motorabschaltung erreicht ist, so wird automatisch das Motor-Aus-Relais (109) aktiviert, was die Spannungszufuhr vom Motor trennt. Gleichzeitig wird auch der Regler (110) gesperrt und das externe Stör-Aus-Signal (32) gegeben, was ein Stillsetzen der Karusselltür zur Folge hat.

### Bezugszeichen

- 1: Motorregler
- 2: Motor
- 3: Tachogenerator
- 4: Soll-Wert-Vorgabe
- 5: programmierbare Steuerung
- 6: Befehlseingang
- 7: Befehlseingang
- 8: Befehlseingang
- 9: Bewegungssensor
- 10: Flügelverriegelung
- 11: Verriegelungssensorik
- 12: Handicap-Befehl
- 13: Sicherheitsstopp
- 14: Sicherheits-Langsamfahrt
- 15: Beleuchtung
- 16: Türverriegelung
- 17: Bremssignal
- 18: Regelfreigabe
- 19: Rechner
- 20: Start-Stopp-Befehl
- 21: Codedrehzahl (Vorgabe)
- 22: Drehzahlspannungsvorgabe
- 23: Frequenzumrichterfehler
- 24: Tachosignal
- 25: Regler-Stopp-Signal
- 26: Frequenzumrichterabschaltung
- 27: Rückmeldung Frequenzumrichter
- 28: Trennsignal Motor-Regler
- 29: Rückmeldung Trennsignal
- 30: Bremssignal
- 31: Rückmeldung Bremssignal
- 32: Sammelstörmeldung
- 33: Fehler im Rechner
- 34: Fehler Bremse
- 35: Fehler Regler
- 36: Fehler Steuerung
- 37: Sicherheitsstopp
- 38: Sicherheit Langsamfahrt
- 39: Watch-Dog-Timer
- 40: Triggersignal
- 41: Reset-Signal
- 42: überprüfung Motor-Bremse
- 43: überprüfung Tachospannung
- 44: Überprüfung Motor-Tacho
- 45: überprüfung Motor-Tacho
- 46: Start
- 47: Rückmeldung
- 48: Fehlermeldung
- 49: Fehlermeldung
- 50: Fehlermeldung
- 51: Antriebsfehlermeldung
- 52: Fehlermeldung
- 53: Fehlerbearbeitung
- 54: Start
- 55: Meldung Langsamfahrt
- 56: Behindertengeschwindigkeit
- 57: Gehgeschwindigkeit
- 58: Information
- 59: Differenzbildner
- 60: Rückmeldung
- 61: Information
- 62: Differenzbildner
- 63: Information
- 64: Differenzbildner
- 65: Start
- 66: Motorbefehl
- 67: Motorüberwachung ausschalten
- 68: Bremsenüberwachung
- 69: Zeitglied
- 70: Fehlermeldung
- 71: Notabschaltung
- 72: Start
- 73: Bremsenbefehl
- 74: Bremsenüberwachung ausschalten
- 75: Stillstandsüberwachung
- 76: Fehlermeldung
- 77: Start
- 78: Motorüberwachung
- 79: überwachung ausschalten
- 80: Langsamfahrtüberwachung
- 81: Fehlermeldung
- 82: Start
- 83: Analogwertüberprüfung
- 84: Überwachung aus
- 85: Startbefehl
- 86: Ist-Wert
- 87: Soll-Ist-Wert-Vergleich
- 88: Speicher
- 89: Zeitglied
- 90: Regelabweichung
- 91: Überprüfung
- 92: Geschwindigkeitsreduzierung
- 93: Rückmeldung
- 94: Start
- 95: Analogwert-Überprüfung
- 96: Überwachung aus
- 97: Startbefehl
- 98: Ist-Wert
- 99: Soll-Ist-Wert-Vergleich
- 100: Speicher
- 101: Zeitglied
- 102: Regelabweichung
- 103: Überprüfung
- 104: Tür läuft weiter
- 105: Rückmeldung
- 106: Notabschaltung aktiv
- 107: keine Notabschaltung
- 108: Zeitvergleich
- 109: Motor-Relais-Befehl
- 110: Reglerbefehl
- 111: Zeitvergleich
- 112: Schaltbefehl
- 113: Testroutinen beenden
- 114: Bremsbefehl
- 115: Notabschaltung aufheben
- 116: Grundstellung

## Patentansprüche

1. Karusselltür mit einer um eine vertikale Achse, um einen Mittelpunkt drehgelagerten, über einen Elektromotor angetriebenen zentralen Säule bzw. aus Säulen bestehenden Drehkreuz und mehreren daran befestigten Türflügeln, welche von einer im wesentlichen zylindrischen Trommelwand umschlossen sind, die mit einer Zutrittsöffnung und einer dieser diametral gegenüberliegenden Austrittsöffnung versehen ist, wobei im Zutritts- bzw. Austrittsbereich und/oder an den Türflügeln Sensoren vorhanden sind, welche den Drehvorgang und damit die Drehgeschwindigkeit der Karusselltür steuern bzw. regeln und eine elektrisch steuerbare Flügelarrettierung vorhanden ist, durch folgende Merkmale gekennzeichnet, daß zur Steuerung der Drehgeschwindigkeit eine Datenverarbeitungseinheit die optimale Geschwindigkeit bei einem Höchstmaß an Sicherheit im Rahmen eines Ablaufprogrammes in der Form durchführt, daß:
a) ein Multitasking-System den zeitlichen Ablauf der kontinuierlichen Testprozeduren durchführt
b) eine kontinuierliche überwachung der Prozesshardware durchgeführt wird
c) eine kontinuierliche überwachung der externen Steuerelemente der Karusselltür durchgeführt wird,
und daß Mittel vorgesehen sind, die die gemäß dem Ablaufprogramm von der Datenverarbeitungseinheit ermittelten Werte der Drehgeschwindigkeitsparameter über entsprechende Befehlseinheiten an die Steuereinheit, die Motorregelung und Bremseinheit weiterleiten.

2. Karusselltür nach Anspruch 1, dadurch gekennzeichnet, daß die Datenverarbeitungseinheit sich selbst überwacht und bei Auftritt eines bleibenden Fehlers ein Abschalten des Gesamtsystemes bewirkt.

3. Karusselltür nach Anspruch 1, dadurch gekennzeichnet, daß die Datenverarbeitungseinheit die unterschiedlichen Drehgeschwindigkeiten der Karusselltür während des laufenden Betriebes nach dem Integrationsverfahren erkennt und speichert.

4. Karusselltür nach den Ansprüchen 1 und 3, dadurch gekennzeichnet, daß die Daten der gespeicherten Integrationswerte als Ausgangsbasis zur Ermittlung einer notwendigen Bremsphase benutzt werden.

5. Karusselltür nach den Ansprüchen 1 bis 4, dadurch gekennzeichnet, daß die Datenverarbeitungseinheit einen Mikroprozessor umfaßt, in dem neben dem Ablaufprogramm noch weitere Operationsprogramme verarbeitet werden.

6. Karusselltür nach den Ansprüchen 1 und 5, dadurch gekennzeichnet, daß ein Operationsprogramm eine Operationsmenge aufweist, die bei einer gewollten Geschwindigkeitsreduzierung bzw. bis zum Stillstand der Karusselltür eine Rückmessung und überwachung der Motordrehzahl durchführt.

7. Karusselltür nach einem der vorhergehenden Ansprüche, dadurch gekennzeichnet, daß der Mikroprozessor durch einen Watch-Dog-Timer überwacht wird.

8. Karusselltür nach den Ansprüchen 1 und 5, dadurch gekennzeichnet, daß das Multitasking-System ein Operationsprogramm für zwei unabhängige Zeitbasen zur Verfügung stellt und verarbeitet.

9. Karusselltür nach den Ansprüchen 1 bis 8, dadurch gekennzeichnet, daß bei Auftritt nur eines Fehlers im gesamten Ablaufprogramm eine kontrollierte Notabschaltung durchgeführt wird.

## Claims

1. A revolving door comprising a turnstile consisting of a central column or columns driven via an electric motor and mounted for rotation about a vertical axis, about a centrepoint, and comprising a number of door leaves fixed on said turnstile and enclosed by a substantially cylindrical drum type wall having an entry opening and an exit opening diametrically opposite the same, sensors being provided in the entry and exit zones and/or on the door leaves to control or regulate the rotational process and hence the speed of rotation of the revolving door and an electrically controllable leaf stop being provided, characterised by the following features in that to control the speed of rotation a data processing unit produces the optimal speed with the maximum safety in a sequencing program in the following form:
a) a multitasking system progresses the continuous test procedures in time
b) continuous monitoring of the process hardware is effected
c) continuous monitoring of the external control elements of the revolving door is effected,
and in that means are provided which transmit to the control unit, the motor regulation system and brake unit by way of corresponding command units those values of the rotational speed parameters which are detected by the data processing unit in accordance with the sequencing program.

2. A revolving door according to claim 1, characterised in that the data processing unit monitors itself and disconnects the entire system in the event of a permanent fault.

3. A revolving door according to claim 1, characterised in that the data processing unit recognises by the integration method and stores the different speeds of rotation of the revolving door during continuous operation.

4. A revolving door according to claims 1 and 3, characterised in that the data of the stored integration values are used as a starting basis to determine any required braking phase.

5. A revolving door according to claims 1 to 4, characterised in that the data processing unit comprises a microprocessor in which other operation programs are processed in addition to the sequencing program.

6. A revolving door according to claims 1 and 5, characterised in that an operation program comprises an operation quantity which, in the event of a required speed reduction and/or until stoppage of the revolving door, performs a re-measurement and monitoring of the motor speed.

7. A revolving door according to any one of the preceding claims, characterised in that the microprocessor is monitored by a watch dog timer.

8. A revolving door according to claims 1 and 5, characterised in that the multitasking system makes available and processes an operation program for two independent time bases.

9. A revolving door according to claims 1 to 8, characterised in that in the event of only one fault occurring in the entire sequencing program a controlled emergency disconnection is effected.

## Revendications

1. Porte tournante composée d'une colonne centrale montée à rotation en son centre autour d'un axe vertical et entraînée par un moteur électrique ou encore d'une croix de rotation formée de colonnes et portant plusieurs battants de porte qui sont entourés par une paroi de tambour essentiellement cylindrique, munie d'un orifice d'accès et d'un orifice de sortie diamétralement opposé au précédent, des capteurs étant prévus dans la zone d'entrée ou la zone des sortie et/ou sur les battants de la porte, pour commander la rotation et ainsi la vitesse de rotation de la porte tournante ou la réguler et un blocage à commande électrique des battants, porte caractérisée en ce que pour commander la vitesse de rotation, une unité de traitement de données définit la vitesse optimale pour une sécurité maximale dans le cadre d'un programme se déroulant tel que:
a) un système à multitâches effectue le déroulement dans le temps des procédures de tests, continues,
b) il effectue une surveillance continue des circuits de traitement,
c) il effectue une surveillance continue des éléments de commande externes de la porte tournante,
et des moyens sont prévus pour transmettre les valeurs obtenue suivant le programme de déroulement par l'unité de traitement de données, concernant les paramètres de vitesses de rotation, par différentes unités d'ordre à l'unité de commande, à la régulation du moteur et à l'unité de frein.

2. Porte toumante selon la revendication 1, caractérisée en ce que l'unité de traitement de données se surveille elle-même et à l'arrivée d'un défaut permanent elle commande la coupure de l'ensemble du système.

3. Porte tournante selon la revendication 1, caractérisée en ce que l'unité de traitement de données reconnaît et enregistre les différentes vitesses de rotation de la porte tournante pendant le fonctionnement continu par un procédé d'intégration.

4. Porte tournante selon les revendication 1 et 3, caractérisée en ce qu'on utilise les données des valeurs d'intégration, enregistrées comme base de sortie pour déterminer une phase de freinage nécessaire.

5. Porte tournante selon les revendication 1 à 4, caractérisée en ce que l'unité de traitement de données comprend un microprocesseur qui exécute non seulement le programme de déroulement mais également d'autres programmes opérationnels.

6. Porte tournante selon les revendications 1 et 5, caractérisée en ce qu'un programme d'opérations présente une quantité d'opérations qui exécute pour une réduction voulue de la vitesse ou jusqu'à l'arrête de la porte tournante, une mesure en retour et une surveillance de la vitesse de rotation du moteur.

7. Porte tournante selon l'une des revendications précédentes, caractérisée en ce que le microprocesseur est surveillé par une horloge de type chien des garde.

8. Porte tournante selon l'une des revendications 1 et 5, caractérisée en ce que le système multitâches dispose d'un programme de travail pour deux bases de temps, indépendantes et les exécute.

9. Porte tournante selon les revendications 1 à 9, caractérisée en ce qu'à l'arrivée d'un seul défaut dans l'ensemble du programme de déroulement une coupure de secours, contrôlées se produit.
